**Europäisches Patentamt**

**European Patent Office**

**Office Européen des brevets**

(11) Veröffentlichungsnummer: **0 224 711 B1**

# EUROPÄISCHE PATENTSCHRIFT

(45) Veröffentlichungstag der Patentschrift:
02.01.91 Patentblatt 91/01

(21) Anmeldenummer: **86114851.8**

(22) Anmeldetag: **25.10.86**

(51) Int. Cl.⁵: **H02H 11/00**

(54) **Verfahren zum schaltfehlergeschützten Betätigen der Schaltgeräte einer Schaltanlage.**

(30) Priorität: **14.11.85 CH 4880/85**

(43) Veröffentlichungstag der Anmeldung:
**10.06.87 Patentblatt 87/24**

(45) Bekanntmachung des Hinweises auf die
Patenterteilung:
**02.01.91 Patentblatt 91/01**

(84) Benannte Vertragsstaaten:
**CH DE GB LI NL SE**

(56) Entgegenhaltungen:
**EP-A- 0 103 137**
**EP-A- 0 103 151**

(56) Entgegenhaltungen:
**IEE PROCEEDINGS, Band 126, Nr. 2, Februar
1979, Seiten 152-158; D. LIDGATE et al.:
"Electrical interlock design for complex
high-power switching networks"
IEE PROCEEDINGS-C, Band 127, Nr. 5,
September 1980, Seiten 317-323; D. LIDGATE
et al.: "Electrical operational interlocks for a
fossil-fired power station auxiliary system"**

(73) Patentinhaber: **BBC Brown Boveri AG
Haselstrasse
CH-5401 Baden (CH)**

(72) Erfinder: **Brand, Klaus-Peter, Dr.
Rebhaldenstrasse 12
CH-5430 Wettingen (CH)**
Erfinder: **Kopainsky, Jürgen, Dr.
Sommerhaldenstrasse 4a
CH-5200 Brugg (CH)**
Erfinder: **Wimmer, Wolfgang, Dr.
Schulstrasse 2
CH-5417 Untersiggenthal (CH)**

## Beschreibung

Bei der Erfindung wird ausgegangen von einem Verfahren zum schaltfehlergeschützten Betätigen der Schaltgeräte einer Schaltanlage gemäss dem ersten Teil von Patentanspruch 1.

Ein solches Verfahren ist beispielsweise aus der EP-A2-0 103 137 bekannt. Beim bekannten Verfahren wird mit den Stellungsmeldesignalen der Schaltgeräte eines Schaltfeldes einer aus mehreren Schaltfeldern bestehenden Schaltanlage ein digitales Abbild des Betriebzustandes des Schaltfeldes unter Simulation einer angeforderten Schalthandlung erzeugt. Die digitalen Abbilder der einzelnen Schaltfelder werden sodann fortlaufend zyklisch abgefragt und zu einem zentralen Sammelspeicher übertragen, in dem sie zu einem Gesamtbild zusammengefügt werden. Dieses Gesamtbild wird anschliessend zu jedem Schaltfeld übertragen und dort bis zum Eintreffen des nächsten Gesamtbildes gespeichert. Bei Anforderungen einer Schalthandlung wird in dem betreffenden Schaltfeld anhand eines darauf eintreffenden Gesamtbildes auf Schaltfehlerschutz Verriegelungsbedingungen geprüft und bei negativem Entscheid die angeforderte Schalthandlung ausgeführt.

Hierdurch können bei einer Einrichtung zur Durchführung des genannten Verfahrens zwar Verriegelungsrelais, Verriegelungskabelbäume und Querverkabelungen entfallen, jedoch blockiert bereits der Ausfall des zentralen Sammelspeichers die Durchführung dieses Verfahrens.

Die Erfindung, wie sie in Patentanspruch 1 gekennzeichnet ist, löst die Aufgabe, ein Verfahren der eingangs genannten Art anzugeben, welches sich durch hohe Betriebssicherheit auszeichnet und in einfacher Weise an Änderungen des Aufbaus der Schaltanlage und/oder der Schaltfehlerschutz-Verriegelungsregeln angepasst werden kann.

Mit der Erfindung wird erreicht, dass der topologische Aufbau der Schaltanlage und die Schaltfehlerschutz-Verriegelungsregeln entkoppelt werden. Durch diese Entkoppelung können Änderungen im topologischen Aufbau der Schaltanlage vorgenommen werden, ohne den bisher verwendeten Schaltfehlerschutz aufgrund des geänderten topologischen Aufbaus von Grund auf neu zu gestalten. Es lässt sich vielmehr der frühere Schaltfehlerschutz wieder herstellen, wenn unter Beibehaltung der bereits gespeicherten Schaltfehlerschutz-Verriegelungsregeln lediglich die geänderte topologische Anordnung der Schaltanlage vom Schaltfehlerschutz erfasst wird. Entsprechend können Änderungen der Schaltfehlerschutz-Verriegelungsregeln vorgenommen werden, ohne den bisher verwendeten Schaltfehlerschutz von Grund auf neu zu gestalten.

Nachfolgend wird ein Ausführungsbeispiel der Erfindung anhand der Zeichnung näher erläutert. Hierbei zeigt:

Fig. 1 ein schematisches Schaltbild einer aus drei Abzweigen bestehenden Hochspannungsschaltanlage mit einer Einrichtung zur Durchführung des erfindungsgemässen Verfahrens zur schaltfehlergeschützten Betätigung der Schaltgeräte dieser Anlage,

Fig. 2 ein Datenflussdiagramm für das schaltfehlergeschützte Betätigen der Schaltgeräte der Hochspannungsschaltanlage gemäss Fig. 1,

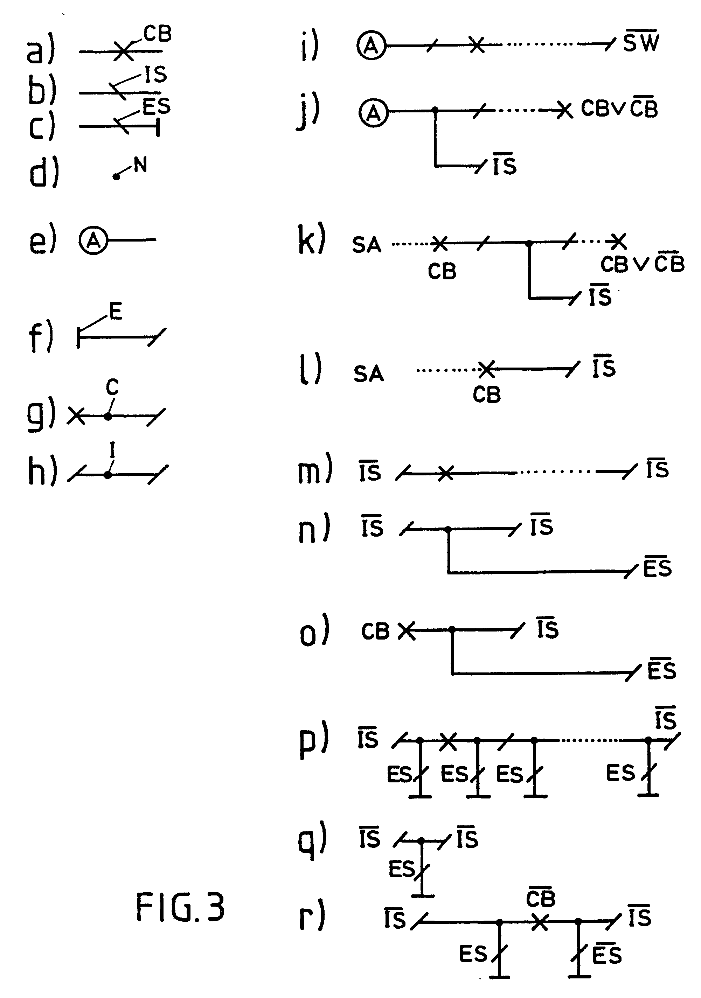

Fig. 3 eine graphische Darstellung eines Basissatzes von dem erfindungsgemässen Verfahren zugrundeliegenden topologischen Elementen,

Fig. 4 ein einpoliges Schema eines Abzweiges der in Fig. 1 angegebenen Hochspannungsschaltanlage mit dessen Hilfe unter a) der topologische Aufbau des Abzweiges und unter b) der aktuelle Betriebszustand dieses Abzweiges dargestellt sind, und

Fig. 5 ein Blockschaltbild zweier Mikrorechner zur Realisierung des Datenflussdiagramms gemäss Fig. 2.

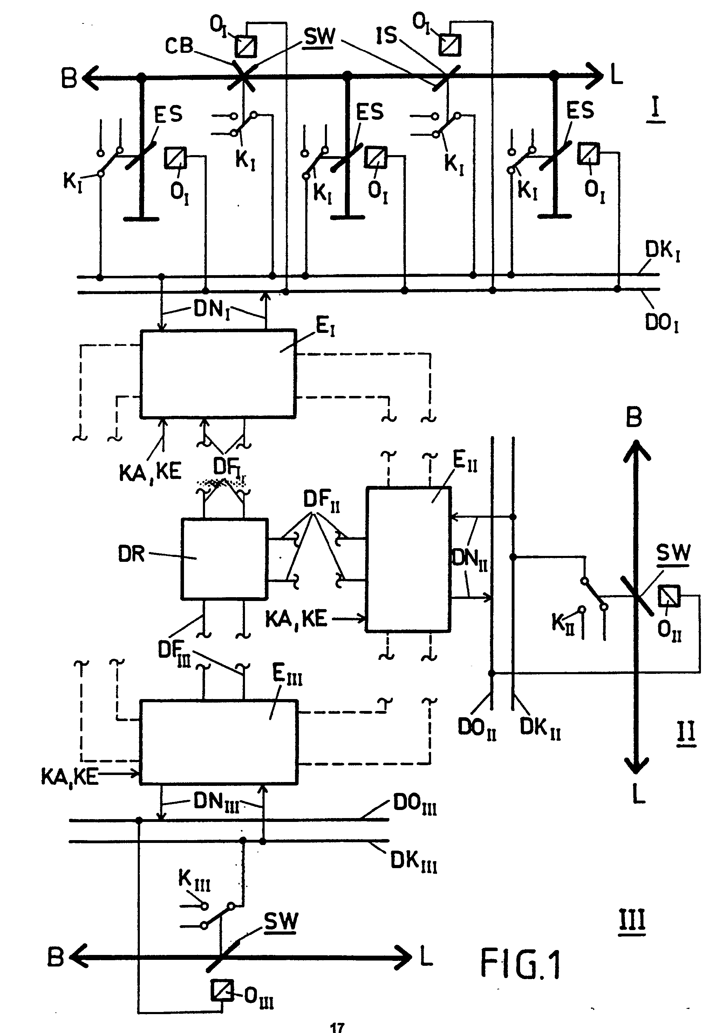

Die in Fig. 1 dargestellte Hochspannungsschaltanlage enthält beispielsweise drei Abzweige I, II und III. Jeder dieser Abzweige weist stark ausgezogen dargestellte Hochspannungskomponenten, wie Sammelschienen B, Leitungen L und Schaltgeräte SW, und dünn ausgezogen dargestellte Komponenten zur schaltfehlergeschützten Betätigung der Schaltgeräte SW dieser Hochspannungsschaltanlage auf.

Die Hochspannungskomponenten jeder der drei Abzweige I, II und III können jede beliebige und den Vorschriften entsprechende topologische Anordnung aufweisen. So ist beispielsweise beim Abzweig I ein zwischen die Sammelschiene B und die Leitung L geschalteter Leistungsschalter CB dargestellt, welcher über einen Trennschalter IS mit der Leitung L verbindbar oder von dieser trennbar ist. Ferner sind drei Erdungsschalter ES vorgesehen, welche jeweils einen Anschluss des Leistungsschalters CB und des Trennschalters IS sowie den gemeinsamen Anschluss von Leistungs- und Trennschalter an Erde legen oder von Erde trennen. Bei den Abzweigen II und III ist die Topologie lediglich symbolisch durch Angabe jeweils einer Sammelschiene B, eines Schaltgerätes SW und einer Leitung L angedeutet.

Die Schaltgeräte SW weisen jeweils Stellungsmeldekontakte $K_I$, $K_{II}$ und $K_{III}$ auf, deren vom Schaltzustand des zugeordneten Schaltgerätes SW abhängige Signale über einen jedem Abzweig I, II bzw. III zugehörigen Datenbus $DK_I$, $DK_{II}$ bzw. $DK_{III}$ und Datennahverbindungen $DN_I$, $DN_{II}$ bzw. $DN_{III}$ dem Eingang einer dem jeweiligen Abzweig I, II, bzw. III zugeordneten Datenerfassungs- und Datenverarbeitungseinheit $E_I$, $E_{II}$ bzw. $E_{III}$ zugeführt werden. Ein Ausgang jeder der drei Datenerfassungs- und Datenverarbeitungseinheiten wirkt jeweils über einen Datenbus $DO_I$, $DO_{II}$ bzw. $DO_{III}$ auf Betätigungsorgane $O_I$, $O_{II}$ bzw. $O_{III}$ der Schaltgeräte SW jedes der Abzweige I, II bzw. III.

Die Datenerfassungs- und Datenverarbeitungseinheiten $E_I$, $E_{II}$ bzw. $E_{III}$ weisen jeweils einen weiteren Eingang und einen weiteren Ausgang auf, welche über Datenfernverbindungen $DF_I$, $DF_{II}$ bzw. $DF_{III}$ mit einem Datenrangierer DR verbunden sind. Hierdurch wird eine Kommunikation der Datenerfassungs- und Datenverarbeitungseinheiten untereinander ermöglicht. In entsprechender Weise kann eine Kommunikation der Datenerfassungs- und Datenverarbeitungseinheiten auch dadurch ermöglicht werden, dass die Datenerfassungs- und Datenverarbeitungseinheiten über Datenfernverbindungen in Form eines Ringes (gestrichelt gezeichnet) oder eines Busses geschaltet oder netzförmig vermascht miteinander verbunden sind. Weiterhin ist es auch möglich, anstelle der dezentral jedem der Abzweige zugeordneten Datenerfassungs- und Datenverarbeitungseinheiten eine einzige Datenerfassungs- und Datenverarbeitungseinheit vorzusehen, welche die Signale der Stellungsmeldekontakte der Schaltgeräte der Abzweige über Datenfernverbindungen empfängt, zentral verarbeitet und Befehle an die Betätigungsorgane der Schaltgeräte jedes der Abzweige aussendet.

Jede Datenerfassungs- und Datenverarbeitungseinheit weist ferner einen Eingang auf, dem Schalthandlungs-Anforderungsbefehlen KA, KE zugeordnete Signale zugeführt werden, durch welche eine Betätigung eines der Schaltgeräte SW eines der Abzweige bewirkt werden soll.

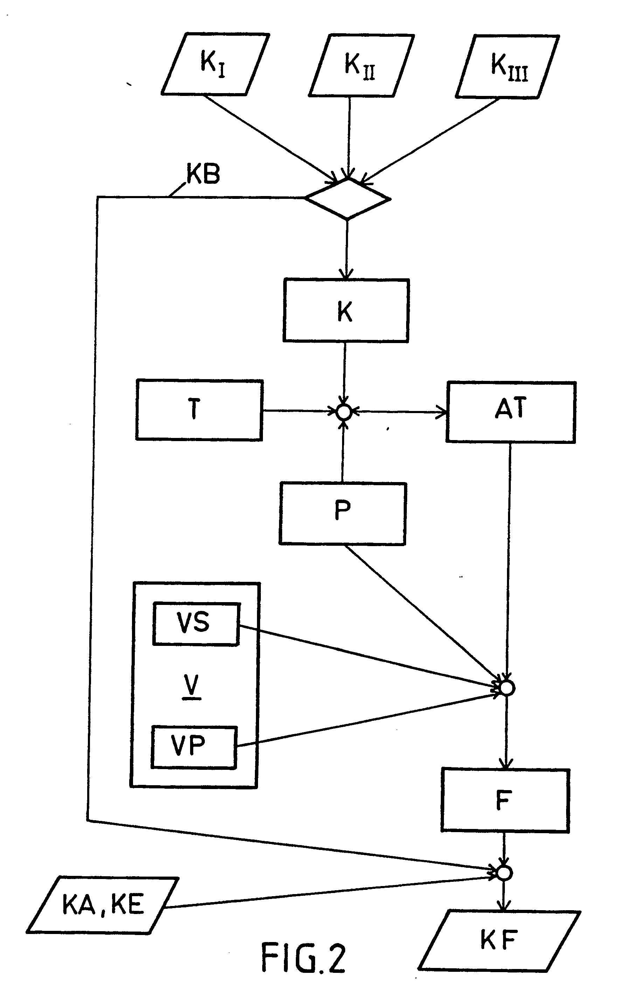

Die in jede der Datenerfassung- und Datenverarbeitungseinheiten $E_I$, $E_{II}$ bzw. $E_{III}$ gelangenden aktuellen Signale der Stellungsmeldekontakte $K_I$, $K_{II}$ und $K_{III}$ aller Schaltgeräte SW der Hochspannungsschaltanlage werden - wie in Fig. 2 dargestellt ist - in der jeweiligen Datenerfassungs- und Datenverarbeitungseinheit bei K während einer kurzen Periode, in der die Stellungsmeldekontakte aller Schaltgeräte der Hochspannungsschaltanlage abgefragt werden, abgelegt. Zuvor wird nachgeprüft, ob ein Signal vorliegt, welches einen undefinierten Zustand eines der Schaltgeräte SW, z.B. eine aktuelle Betätigung oder ein Versagen, beinhaltet. Liegt ein solches Signal vor, so wird ein Blockiersignal KB gebildet, welches eine Weitergabe von Schalthandlungs-Anforderungsbefehlen KA und KE verhindert.

Die im Speicher K abgelegten Signale der Stellungsmeldekontakte aller Schaltgeräte SW der Hochspannungsschaltanlage werden über ein in einem Speicher P abgelegtes Steuerprogramm mit Daten verknüpft, welche in einem Speicher T abgelegt sind und den topologischen Aufbau der Hochspannungsschaltanlage betreffen. Hierbei werden den aktuellen Betriebszustand beschreibende topologische Elemente gebildet, welche vorübergehend in einem Speicher AT abgelegt werden. Die im Speicher AT abgelegten topologischen Elemente werden sodann über das im Speicher P vorgesehene Steuerprogramm abgerufen und mit Schaltfehlerschutz-Verriegelungsregeln verknüpft, welche unabhängig von der gespeicherten topologischen Anordnung der Hochspannungsschaltanlage in einem Speicher V abgelegt werden. Hierbei wird jedem Schaltgerät der Hochspannungsschaltanlage eine Freigabe oder eine Blockierung eines ggfs. anstehenden Schalthandlungs-Anforderungsbefehls KA, KE zugeordnet und diese als Freigabebild bezeichnete Zuordnung in einem Speicher F abgelegt.

Die Schaltfehlerschutz-Verriegelungsregeln beruhen auf einem jeder beliebigen Schaltanlage zuordenbaren Basissatz von topologischen Elementen. Sie ermöglichen es, unabhängig vom topologischen Aufbau dieser beliebigen Schaltanlage für jedes ihrer Schaltgeräte eine Freigabe oder eine Blockierung des Schalthandlungs-Anforderungsbefehls KA bzw. KE zu ermitteln. Hierbei ist es im Hinblick auf eine aus betriebsphilosophischen Gründen ggfs. erwünschte Abänderung der Schaltfehlerschutz-Verriegelungsregeln vorteilhaft, für Regeln, welche die Betriebssicherheit der Schaltanlage betreffen sowie das Verhalten der Schaltgeräte bei einem Schaltvorgang und/oder bei einem unbestimmten Schaltzustand, in einem Teilspeicher VS abzulegen und unabhängig davon in einem Teilspeicher VP Regeln abzulegen, welche die Betriebsphilosophie betreffen und beispielsweise die Betriebssicherheit der Schaltanlage bei unerkannten und unbeabsichtigten Potentialänderungen erhöhen, stets ein selektives Schalten eines Abzweiges mit einem Leistungsschalter ermöglichen und/oder stets die Einhaltung vorgeschriebener Schaltsequenzen ermöglichen.

Ein an der Datenerfassungs- und Datenverarbeitungseinheit anstehender Schalthandlungs-Anforderungsbefehl KA, KE für eines der Schaltgeräte wird nach Abfragen des Freigabebildes entweder freigegeben oder blockiert, so dass am Ausgang der Datenerfassungs- und Datenverarbeitungseinheit ein schaltfehlerfreier Schalthandlungs-Anforderungsbefehl KF an das angewählte Schaltgerät ansteht.

Der Basissatz der topologischen Elemente ist so gewählt, dass alle Schaltzustände nachgebildet werden und alle Schaltfehlerschutz-Verriegelungsregeln mit ihrer Hilfe beschrieben werden können. Die topologischen Elemente stellen daher Zustände und Eigenschaften dar, welche für eine Verriegelung relevant sind, wie etwa Potentialgleichheit (Stromverbindung), Potentialhöhe (aktiv, passiv, geerdet) und Nachbarschaft (etwa Beziehungen zwischen benachbarten Schaltgeräten und Abzweigen). In den nachfolgenden Tabellen 1 und 2 sind die topologischen Elemente angegeben und zwar unterteilt in einfache topologische Elemente und aus den einfachen topologischen Elementen zusammengesetzte topologische Elemente.

## T A B E L L E  1

| Bezeich-nung | topologische Beschreibung | Komponente der Unterstation | graphische Darstellung |
|---|---|---|---|
| SW | Kante im einpoligen Schema einer Schaltanlage | Schaltgerät (CB, IS, ES) | |
| CB | | Leistungsschalter | Fig. 3, a |
| IS | | Trennschalter | Fig. 3, b |
| ES | | Erdungsschalter | Fig. 3, c |
| N | Knotenpunkt im einpoligen Schema der Schaltanlage | Nichttrennbare elektrische Leiter | Fig. 3, d |
| | Randknotenpunkt | Offenes Ende im Einphasendiagramm | |
| A | Aktiver Randknotenpunkt, d.h. Knotenpunkt, welcher unabhängig von der Stellung des Schaltgerätes der Unterstation mit Energie beaufschlagbar ist | Leistungstransformator Reaktor, Leitung | Fig. 3, e |
| E | Geerdeter Randknotenpunkt | Erdungspunkt. Kann mit der Schaltanlage durch ES verbunden werden | Fig. 3, f |
| C | Leistungsschalter-knotenpunkt | Knotenpunkt, verbunden mit einem CB und IS | Fig. 3, g |
| I | Trennschalter-knotenpunkt | Knotenpunkt, verbunden mit IS und ES | Fig. 3, h |

| Bezeich-nung | topologische Beschreibung | Begrenzung | | graphische Darstellung |
|---|---|---|---|---|
| | | Schalt-gerät | Rand knoten-punkt | |
| S | Sequenz von Knotenpunkten und Kanten | $\overline{SW}$ | A, E | s. unten |
| SA | Aktive Sequenz, d.h. unter Spannung stehende Sequenz mit wenigstens einem akti-ven Randknotenpunkt | $\overline{SW}$ | A | Fig. 3, i |
| SAF | Aktive Sequenz vom Ab-zweigtyp, d.h. ein Teil von SA beginnt an einem aktiven Randknotenpunkt und endet am offenen Trenn-schalter oder dem ersten auftretenden offenen oder geschlossenen Leistungs-schalter | $\overline{IS}$ $CB \smile \overline{CB}$ | A | Fig. 3, j |
| SAB | Aktive Sequenz vom Sammel-schienentyp, d.h. ein Teil von SA ist begrenzt durch offene Trennschalter oder den ersten auftretenden Leistungsschalter; wenig-stens ein Leistungsschalter muss zum Potentialausgleich geschlossen sein | $\overline{IS}$ $CB \smile \overline{CB}$ $CB$ | – | Fig. 3, k |
| SAC | Aktive Sequenz vom Leistungs-schalterknotentyp, d.h. SAB besteht nur aus einem Knoten | $CB$ $\overline{IS}$ | – | Fig. 3, l |
| SP | Passive (freigeschaltete) Sequenz, d.h. eine Sequenz ohne aktiven oder geerde-ten Knotenpunkt | $\overline{SW}$ | – | s. unten |
| SPM | Passive Sequenz mit mehr als einem Knotenpunkt | $\overline{SW}$ | – | Fig. 3, m |
| SPI | Passive Sequenz mit ledig-lich einem freigeschalte-ten Trennschalterknotenpunkt | $\overline{IS}$ $\overline{ES}$ | – | Fig. 3, n |
| SPC | Passive Sequenz mit ledig-lich einem freigeschalteten Leistungsschalterknotenpunkt | $\overline{IS}, \overline{ES}$ $\overline{CB}$ | – | Fig. 3, o |

T A B E L L E  2

| Bezeich-nung | topologische Beschreibung | Begrenzung | | graphische Darstellung |
|---|---|---|---|---|
| | | Schalt-gerät | Rand-knoten-punkt | |
| SE | Geerdete Sequenz, d.h. Sequenz mit wenigstens einem geerdeten und ohne aktiven Knotenpunkt | $\overline{SW}$ | E | s. unten |
| SEM | Geerdete Sequenz mit mehr als einem Knotenpunkt (ausgenommen SEI); alle Erdungsschalter geschlossen | $\overline{IS}$ | E | Fig. 3, p |
| SEI | Geerdete Sequenz mit lediglich einem Knotenpunkt | $\overline{CB}$, $\overline{IS}$ | E | Fig. 3, q |
| SEC | Freigabeschalter; offener, geerdeter Leistungsschalter | $\overline{IS}$ $\overline{ES}$ | E | Fig. 3, r |
| SU | Sequenz mit wenigstens einem Schaltgerät von undefiniertem Zustand | $\overline{SW}$ | A, E | - |

Ein offenes Schaltgerät SW kann daher im allgemeinen in zwei verschiedenen topologischen Elementen (Ausnahme Element SEC), welche jeweils an einem der beiden Schalteranschlüsse angeordnet sind, enthalten sein. Wenn das Schaltgerät SW Teil einer Schleife ist, dann stimmen beide topologischen Elemente überein. Ein geschlossenes Schaltgerät SW ist immer in einem einzigen topologischen Element enthalten.

Die Grenzen aller einfachen topologischen Elemente sind fest. Die zusammengesetzten topologischen Elemente haben entweder feste Längen oder ihre Längen ändern sich beim Schalten. Die ersteren legen daher lokale Eigenschaften fest, d.h. Nachbarschaftsbeziehung (SPI, SPC, SEI, SEC), und die letzteren Eigenschaften des Gesamtsystems.

Die Schaltfehlerschutz-Verriegelungsregeln können nun unter Zuhilfenahme der vorstehend definierten topologischen Elemente angegeben werden und sind nachfolgend in der Tabelle 3 dargestellt.

## T A B E L L E 3

| Gruppe | Regel-Nr. | Gerät | Befehl | Toplogieänderung und Indexbedingung |
|---|---|---|---|---|
| **1. Sicherheit**<br>Vermeidung von Schaden an Ausrüstung und Risiko an Personal | 11 | SW | Schliessen | $SA + SE \longrightarrow$ |
| | 12 | IS | Schliessen | $SA_i + SA_j \longrightarrow$<br>$i \neq j$ |
| | 13 | IS | Oeffnen | $SA \longrightarrow SA_i + SA_j$<br>$i \neq j$ |

| Regel-Nr. | Beschreibung der Topologieänderung | Grund für Verriegelung |
|---|---|---|
| 11 | Verbindung von unter Spannung stehendem mit geerdetem Teil | Erdungsfehler ergibt Schaden |
| 12 | Verbindung zweier verschiedener unter Spannung stehender Teile mit Trennschalter | Vermeidung von Lastschaltung mit Trennschaltern |
| 13 | Auftrennen eines unter Spannung stehenden Teils mit Trennschalter | |

| Gruppe | Regel-Nr. | Gerät | Befehl | Toplogieänderung und Indexbedingung |
|---|---|---|---|---|
| **2. Realität**<br>Verhalten bei unbestimmten (vorübergehenden) und/oder unbekannten Zuständen | 21 | SW | Schalten | R $\longrightarrow$ |
| | 22 | SW | Schliessen | S + SU $\longrightarrow$ |
| | 23 | SW | Oeffnen | SU $\longrightarrow$ |

| Regel-Nr. | Beschreibung der Topologieänderung | Grund für Verriegelung |
|---|---|---|
| 21 | Bei laufendem Schaltgerät keine weitere Schaltung vornehmen | Wechselwirkung zwischen zwei Schaltvorgängen vermeiden |
| 22 | Verbindung irgendeines Teils mit einem Teil von unbekanntem Zustand | Schaltung bei unbekannten Zuständen sollte wegen möglicher Gefährung vermieden werden |
| 23 | Oeffnen eines Schaltgeräts, welches in einem Teil mit unbekanntem Zustand angeordnet ist | |

| Gruppe | Regel-Nr. | Gerät | Befehl | Topologieänderung und Indexbedingung |
|---|---|---|---|---|
| **3. Fehlerwirkungs-begrenzung** Verringerung der Gefährung bei un-entdeckten und un-beabsichtigten Potentialände-rungen | 31 | IS | Schlies-sen | a) SA + SPM →  b) SA + SPI → |
| | 32 | IS | Schlies-sen | SE + SP → |
| | 33 | CB | Schlies-sen | |
| | 34 | IS | Schlies-sen | S + SEC → |
| | 35 | ES | Schlies-sen | SE + SPM → |
| | 36 | ES | Oeffnen | SEM → |

| Regel-Nr. | Beschreibung der Topologieänderung | Grund für Verriegelung |
|---|---|---|
| 31 | Verbindung eines unter Spannung stehenden und eines freigeschalteten Teils, welcher kein freigeschalte-ter Leistungsschalter-knotenpunkt ist | Erdungsfehler über Trenn-schalter mit freigeschalte-tem Teil, welches in Wirk-lichkeit geerdet ist. |
| 32 33 | Verbindung eines geerdeten mit einem freigeschalteten Teil | Uebertragung von Erdpotential sollte vermieden werden |
| 34 | Verbindung eines geerdeten Teils mit einem unvoll-ständig geerdeten Leistungs-schalter | Lediglich bei nicht vorhan-dener Spannungsfestigkeit des Leistungsschalters |
| 35 36 | Verbindung eines geerdeten Punktes mit einem freige-schalteten Teil, welches grösser als ein einzelner Punkt ist | Lediglich isolierte Punkte sollten mit Erde verbunden werden |

| Gruppe | Regel-Nr. | Gerät | Befehl | Topologieänderung und Indexbedingung |
|---|---|---|---|---|
| **4. Selektivität** Stets das selektive Schalten eines Abzweiges durch einen Leistungsschalter gewährleisten, d.h. es gibt nur einen Leistungsschalter am Ende einer Abzweigschutzzone | 41 | CB | Schliessen | $SAF_i + SAF_j \longrightarrow$ $i \neq j$ |
| | 42 | IS | Schliessen | $SAF_i +$ $SAB_j \, (\overline{SAF_i} \vee SAF_k) \longrightarrow$ $i \neq k$ |
| | 43 | CB | Schliessen | $SAF_i + SAB_j \, (SAF_i) \longrightarrow$ |
| | 44 | CB | Oeffnen | $SAB_i \longrightarrow (SAB_i + SAB_j)$ |

| Regel-Nr. | Beschreibung der Topologieänderung | Grund für Verriegelung |
|---|---|---|
| 41 | Verbindung zweier verschiedener Teile vom Abzweigtyp durch Leistungsschalter | Für einen Abzweig sollte mehr als ein Leistungsschalter vermieden werden |
| 42 | Verbindung eines Teils vom Abzweigtyp mit einem Teil vom Sammelschienentyp, welches nicht oder nicht nur durch dasselbe Teil vom Abzweigtyp begrenzt ist. | Für jeden Abzweig sollte ein Leistungsschalter vorhanden sein. |
| 43 | Verbindung eines Teils vom Abzweigtyp mit einem Teil vom Sammelschienentyp ist gestattet, wenn es nur durch dasselbe Teil vom Abzweigtyp begrenzt ist. | Mit zwei Leistungsschaltern sollten Schleifen vermieden werden, d.h. ein Strompfad sollte nur von einem Leistungsschalter unterbrochen werden. |
| 44 | Oeffnen einer Schleife vom Sammelschienentyp mit nur einem Leistungsschalter durch den Leistungsschalter | Mit einem Leistungsschalter sollte das Oeffnen einer Schleife vermieden werden, welche einen Strompfad ergibt, der nur Trennschalter enthält. |

| Gruppe | Regel-Nr. | Gerät | Befehl | Topologieänderung und Indexbedingung |
|--------|-----------|-------|--------|--------------------------------------|
| **5. Schaltfolge** Unnötige Schaltfolgen sollten vermieden werden | 51 | CB | Schliessen | S + SPC ⟶ |
| | 52 | IS | Oeffnen | SA ⟶ S + SAC |

| Regel-Nr. | Beschreibung der Topologieänderung | Grund für Verriegelung |
|-----------|-----------------------------------|------------------------|
| 51 | Verbindung irgendeines Teils mit einem freigeschalteten Leistungsschalterknotenpunkt durch den Leistungsschalter | Schaltfolge einhalten. Beim Oeffnen: zuerst Leistungsschalter, dann Trennschalter. |
| 52 | Erzeugung eines unter Spannung stehenden Leistungsschalterknotenpunktes durch das Oeffnen eines Trennschalters | Beim Schliessen: zuerst Trennschalter, dann Leistungsschalter |

In der Tabelle 3 bezeichnet ij topologische Elemente, welche auf beiden Seiten des zu betätigenden Schaltgerätes angeordnet sind. Durch Nachprüfung ist unmittelbar zu ersehen, dass die mittels der topologischen Elemente definierten Schaltfehlerschutz-Verriegelungsregeln allen Anforderungen standhalten. Sie sind unabhängig von der Beschaffenheit jeder beliebigen Schaltanlage. Ferner können zusätzliche Regeln hinzutreten oder bestimmte dieser Regeln aufgehoben werden, ohne dass die bereits vorhandenen Regeln geändert werden müssen.

Bei der Durchführung des erfindungsgemässen Verfahrens wird zunächst der topologische Aufbau der Schaltanlage gespeichert. Diese Aufgabe kann ein Rechner (Hostcomputer) übernehmen, in den die im einpoligen Schema der Schaltanlage vorhandenen einfachen topologischen Elemente, wie Knotenpunkte und Schaltgeräte, eingegeben werden. Hierbei werden die Knotenpunkte fortlaufend durchnumeriert und ihre Beziehungen zu benachbarten Knotenpunkten festgelegt.

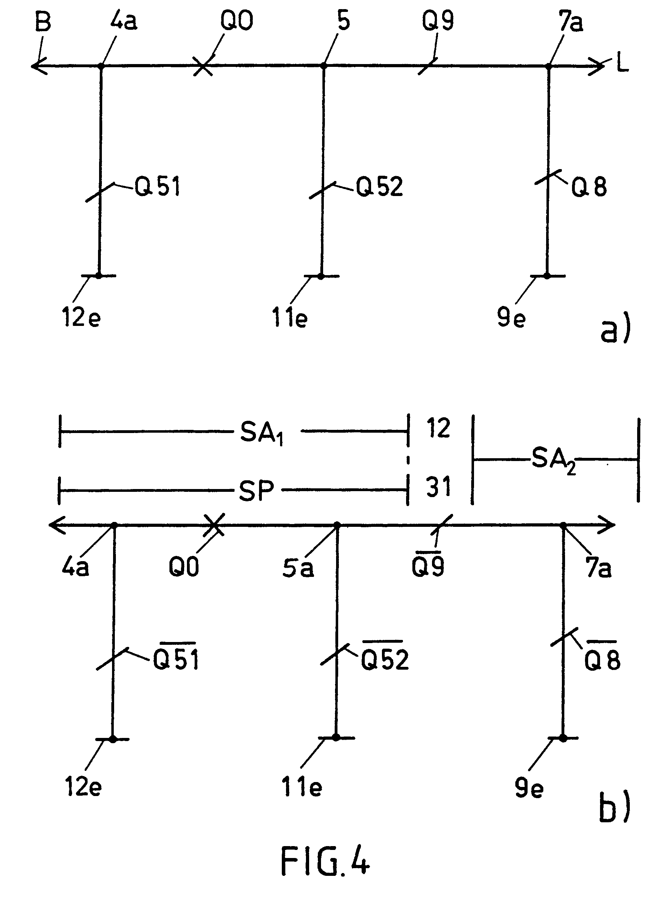

Bei dem in Fig. 4a) im einpoligen Schema angegebenen Abzweig I wird der topologische Aufbau etwa dadurch erfasst, dass die Knotenpunkte mit Bezugszeichen 4, 5, 7, 9, 11 und 12 markiert werden, dass die Schaltgeräte angegeben werden, welche die Beziehung benachbarter Knotenpunkte festlegen, wie ein Leistungsschalter Q0 zwischen den Knotenpunkten 4 und 5, ein Trennschalter Q9 zwischen den Knotenpunkten 5 und 7 und je ein Erdungsschalter Q51, Q52 bzw. Q8 zwischen den Knotenpunkten 4 und 12, 5 und 11 bzw. 7 und 9, und dass schliesslich der elektrische Zustand von Randknotenpunkten durch zusätzliche Markierungen, wie etwa a für aktiv und e für geerdet angegeben wird, wie z.B. der durch die Sammelschiene B bzw. die Leitung L bedingte aktive Zustand der Knotenpunkte 4 und 7 bzw. der geerdete Zustand der Knotenpunkte 9, 11, 12.

Sodann lässt sich mit Hilfe der aktuellen Signale der Stellungsmeldekontakte aller Schaltgeräte der Hochspannungsschaltanlage der durch topologische Elemente festgelegte, aktuelle Betriebszustand des Abzweiges ermitteln, welcher in Fig. 4b) grafisch dargestellt ist. Hierbei bedeuten Querstriche über den Bezeichnungen, dass der Trennschalter Q9 sowie die Erdungsschalter Q51, Q52 und Q8 geöffnet sind. Der ohne Querstrich bezeichnete Leistungsschalter Q0 ist hingegen geschlossen.

Bei der Ermittlung des aktuellen Betriebszustandes des Abzweiges I wird von einem Randknotenpunkt mit bekannten elektrischen Eigenschaften, z.B. vom geerdeten Knotenpunkt 12, ausgegangen und zum nächsten Knotenpunkt, z.B. 4, übergegangen. Hierbei wird das Stellungsmeldesignal des Erdungsschalters Q51 berücksichtigt und damit sowie mit der Stellungsmeldung des Leistungsschalters Q0 der elektrische Zustand des Knotenpunktes 4 ermittelt. Berücksichtigt wird hierbei aber auch, ob irgendein Schaltgerät gerade eine Schaltung vornimmt oder ob es als nichtverfügbar gemeldet ist. Sukzessive werden alle bei der Erfassung des topologischen Aufbaus des Abzweiges I gespeicherten Knotenpunkte aufgerufen und in entsprechender Weise deren elektrische Zustand ermittelt. Der auf diese Weise ermittelte aktuelle Betriebszustand des Abzweiges I enthält - wie in Fig. 4 angegeben ist - aktive topologische Elemente, z.B. eine den Leistungsschalter Q0 und die Sammelschiene B umfassende und von den geöffneten Erdungsschaltern Q51 und Q52 sowie vom geöffneten Trennschalter Q9 begrenzte Sequenz $SA_1$ oder SP, welche bei unter Spannung stehender Sammelschiene B aktiv ist und dann mit $SA_1$ bezeichnet ist und welche bei freigeschalteter Sammelschiene B passiv ist und mit SP bezeichnet ist, sowie eine die Leitung L umfassende und vom Erdungsschalter Q8 und dem Trennschalter Q9 begrenzte aktive Sequenz $SA_2$.

Mit Hilfe dieser topologischen Elemente kann nun anhand der gespeicherten Schaltfehlerschutz-Verriegelungsregeln durch Abfragen nachgeprüft werden, ob ein Schalthandlungs-Anforderungsbefehl an eines der Schaltgeräte Q0, Q9, Q51, Q52 und Q8 freizugeben oder zu blockieren ist. So ergibt sich aus den Regeln 12 bzw. 31, dass beispielsweise der offene Trennschalter Q9 nicht geschlossen werden darf und aus der Regel 11, dass die Erdungsschalter Q51, Q52 und Q8 nicht geschlossen werden dürfen. Der Leistungsschalter Q0 hingegen darf geöffnet werden.

Jedem Schaltgerät wird auf diese Weise ein Blockier- oder Freigabezustand zugeordnet. Wird daher ein Schalthandlungs-Anforderungsbefehl an eines dieser Schaltgeräte gegeben, so wird dieser Befehl je nach der Beschaffenheit der diesem Schaltgerät zugeordneten topologischen Elemente freigegeben oder blockiert.

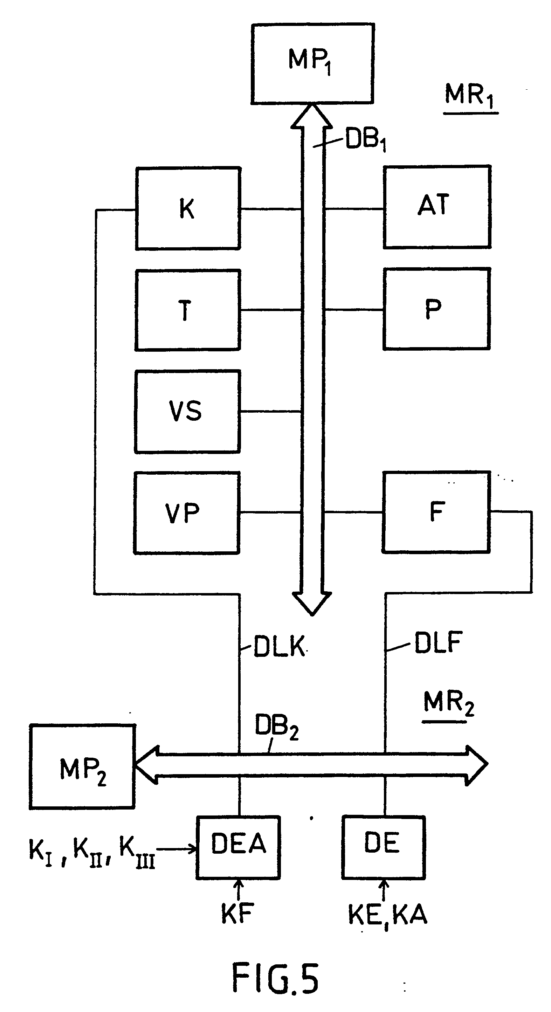

Eine bevorzugte Einrichtung zur Durchführung des vorstehend beschriebenen erfindungsgemässen Verfahrens ist in Fig. 5 dargestellt. Die in Fig. 5 dargestellte Einrichtung umfasst zwei Mikrorechner $MR_1$ und $MR_2$, welche über zwei Datenleitungen miteinander kommunizieren. Der Rechner $MR_1$ weist einen zentralen Datenbus $DB_1$ auf, an welchen ein Mikroprozessor $MP_1$ angeschlossen ist sowie der Speicher K zur Aufnahme der Signale der Stellungsmeldekontakte $K_I$, $K_{II}$, $K_{III}$ der Schaltgeräte der Hochspannungsschaltanlage, der Speicher T zur Aufnahme des topologischen Aufbaus der Hochspannungsschaltanlage, der Teilspeicher VS zur Aufnahme der Pflichtregeln, der Teilspeicher VP zur Aufnahme der von der Betriebsphilosophie der Hochspannungsschaltanlage abhängigen Regeln, der Speicher AT zur Aufnahme der den aktuellen Betriebszustand der Hochspannungsschaltanlage festlegenden topologischen Elemente, der Speicher P zur Aufnahme des Steuerprogramms und der Speicher F zur Aufnahme des Freigabebildes. Die Speicher K, AT und F sind hierbei vorzugsweise als RAM, die Speicher VS und R vorzugsweise als PROM und die Speicher T und VP vorzugsweise als EPROM ausgebildet.

Der Rechner $MR_2$ weist einen zentralen Datenbus $DB_2$ auf, an den ein Mikroprozessor $MP_2$ sowie ein Datenein- und Datenausgabegerät DEA sowie ein Dateneingabegerät DE angeschlossen sind. Ueber das Datenein- und Datenausgabegerät DEA werden die Signale der Stellungsmeldekontakte $K_I$, $K_{II}$ und $K_{III}$ der Schaltgeräte SW der Hochspannungsschaltanlage eingegeben und über den Datenbus $DB_2$ und die Datenleitung DLK in den Speicher K des Mikrorechners $MR_1$ geführt und dort abgelegt. In der vorstehend beschriebenen Weise werden aus den im Speicher K abgelegten Stellungsmeldesignalen sowie aus den in den Speichern T, VS und VP abgelegten Informationen das im Speicher F abgelegte Freigabebild der Schaltgeräte der Hochspannungsschaltanlage ermittelt. Dieses Freigabebild gelangt über die Datenleitung DLF in den Mikrorechner $MR_2$. In diesem Mikrorechner wird aus dem Freigabebild und einem anstehenden und über das Dateneingabegerät DE zugeführten Schalthandlungs-Anforderungsbefehl KE bzw. KA ein schaltfehlerfreier Schalthandlungs-Anforderungsbefehl KF ermittelt, welcher über das Datenein-und Datenausgabegerät DEA zum betreffenden Schaltgerät geführt wird.

## Ansprüche

1. Verfahren zum schaltfehlergeschützten Betätigen der zwischen benachbarten Knotenpunkten (z.B. 4, 5) angeordneten Schaltgeräte (z.B. $Q_0$) einer Schaltanlage, bei dem mit Stellungsmeldesignalen der Schaltgeräte (z.B. $Q_0$) der aktuelle Betriebszustand der Schaltanlage ermittelt und in der Schaltanlage anstehende Schalthandlungs-Anforderungsbefehle (z.B. KA) anhand des ermittelten Betriebszustandes der Schaltanlage mittels Schaltfehlerschutz-Verriegelungsregeln auf Freigabe oder Blockierung abgefragt werden, dadurch gekennzeichnet, dass der topologische Aufbau der Schaltanlage gespeichert wird mittels Signalen, die Informationen enthalten über die Knotenpunkte (z.B. 4, 5) und über die die Beziehungen benachbarter Knotenpunkte (z.B. 4, 5) festlegenden Schaltgeräte (z.B. $Q_0$), dass bei der Ermittlung des aktuellen Betriebszustandes der Schaltanlage aus den aktuellen Stellungsmeldesignalen der Schaltgeräte (z.B.$Q_0$) und den vom topologischen Aufbau der Schaltanlage bestimmten Signalen in einem Basissatz enthaltene topologische Elemente (z.B. $SA_1$, $SA_2$) gebildet werden, welche

12

jeweils in Form eines der Schaltgeräte (z.B. $Q_0$), eines nichtauftrennbaren Knotenpunktes (z.B. 4) oder eines Randknotenpunktes (z.B. 12) als einfaches topologisches Element oder in Form einer Sequenz von Knotenpunkten (z.B. 4, 5) und Schaltgeräten (z.B. $Q_0$) als zusammengesetztes topologisches Element (z.B. $SA_1$) ausgebildet sind, und durch welche alle Betriebszustände topologisch beliebig aufgebauter Schaltanlagen festlegbar sind,

dass unabhängig vom gespeicherten topologischen Aufbau der Schaltanlage voneinander unabhängige Schaltfehlerschutz-Verriegelungsregeln gespeichert werden, welche auf dem Basissatz von topologischen Elementen (z.B. $SA_1$, $SA_2$) beruhen, und

dass durch Abfragen der gespeicherten Schaltfehlerschutz-Verriegelungsregeln mittels der den aktuellen Betriebszustand der Schaltanlage festlegenden topologischen Elemente (z.B. $SA_1$, $SA_2$) ein den Freigabe- oder Blockierzustand jedes der Schaltgeräte (z.B. $Q_0$) der Schaltanlage enthaltendes Freigabebild erzeugt wird.

2. Verfahren nach Anspruch 1, dadurch gekennzeichnet,dass als Schaltgeräte Leistungs (CB)-, Trenn(IS)- und Erdungsschalter (ES), als nicht auftrennbare Knotenpunkte elektrische Verbindungsleitungen, und als Randknotenpunkte Transformatoren, Reaktoren, Leitungen, Erdungspunkte und Verbindungsknotenpunkte zwischen einem Leistungs- und einem Trennschalter sowie zwischen einem Trenn- und einem Erdungsschalter, verwendet werden und als Sequenzen von Knotenpunkten und Schaltgeräten aktive Sequenzen mit wenigstens einem unter Spannung stehenden aktiven Knotenpunkt, geerdete Sequenzen mit wenigstens einem geerdeten und keinem aktiven Knotenpunkt, passive Sequenzen ohne aktive und geerdete Knotenpunkte und undefinierte Sequenzen mit wenigstens einem Schaltgerät von undefiniertem Zustand.

3. Verfahren nach Anspruch 2, dadurch gekennzeichnet,

dass als aktive Sequenz wenigstens eine der folgenden Teilsequenzen verwendet wird :

- eine vom Abzweigtyp, welche an einem aktiven Knotenpunkt beginnt und an geöffneten Trennschaltern oder dem ersten auftretenden geöffneten und geschlossenen Leistungsschalter endet,

- eine vom Sammelschienentyp, welche wenigstens einen geschlossenen Leistungsschalter zur Energieübertragung aufweist und von geöffneten Trennschaltern oder dem ersten vorgesehenen Leistungsschalter begrenzt ist, und

- eine vom Leistungsschalter-Knotenpunkttyp, welche lediglich aus einem einzigen Knotenpunkt besteht,

dass als geerdete Sequenz wenigstens eine der folgenden Sequenzen verwendet wird :

- eine Sequenz des Typs, bei dem mehr als ein Knotenpunkt vorgesehen ist und die zugeordneten Erdungsschalter geschlossen sind,

- eine Sequenz des Typs, bei dem lediglich ein einziger Knotenpunkt vorgesehen ist und der zugeordnete Erdungsschalter geschlossen ist, und

- eine Sequenz des Typs, bei dem ein freigeschalteter, offener und einseitig geerdeter Leistungsschalter vorgesehen ist, und

dass als freigeschaltete Sequenz wenigstens eine der folgenden Sequenzen vorgesehen ist :

- eine Sequenz des Typs, bei dem mehr als ein Knotenpunkt vorgesehen ist,

- eine Sequenz des Typs, bei dem lediglich ein einziger freigeschalteter Trennschalter-Knotenpunkt vorgesehen ist, und

- eine Sequenz des Typs, bei dem lediglich ein einziger freigeschalteter Leistungsschalter-Knotenpunkt vorgesehen ist.

4. Verfahren nach Anspruch 1, dadurch gekennzeichnet,

dass als Schaltfehlerschutz-Verriegelungsregeln Pflichtregeln gespeichert werden, welche insbesondere die Betriebssicherheit der Unterstation betreffen sowie das Verhalten der Schaltgeräte bei einem Schaltvorgang und/oder bei einem unbestimmten Schaltzustand, und

dass unabhängig von den Pflichtregeln von der Betriebsphilosophie abhängige Regeln gespeichert werden, welche insbesondere die Betriebssicherheit der Unterstation bei unerkannten oder unbeabsichtigten Potentialänderungen erhöhen, stets ein selektives Schalten eines Abzweiges mit einem Leistungsschalter ermöglichen und/oder stets die Einhaltung der vorgeschriebenen Schaltfolgen ermöglichen.

## Revendications

1.- Procédé pour l'actionnement avec protection contre les erreurs de commutation des appareils de coupure (par exemple $Q_0$) disposés entre des points nodaux voisins (par exemple 4, 5) d'une installation de distribution électrique, selon lequel l'état de fonctionnement du moment de l'installation de distribution électrique est déterminé au moyen de signaux indicateurs de position des appareils de coupure (par exemple $Q_0$) et des ordres de demande d'action de commutation (par exemple KA), présents dans l'installation de distribution électrique, sont interrogés, sur base de l'état de fonctionnement de l'installation de distribution électrique qui a été déterminé, pour vérifier l'état de libération ou de blocage, au moyen de règles de verrouillage pour la protection contre les erreurs de commutation, caractérisé en ce que :

la structure topologique de l'installation de commutation est stockée au moyen de signaux qui contiennent des informations au sujet des points nodaux (par exemple 4, 5) et des appareils de coupure (par exemple $Q_0$) fixant les relations de points nodaux voisins (par exemple 4, 5), que :

lors de la détermination de l'état de fonctionnement du moment de l'installation de distribution électrique, sont formés, à partir des signaux indicateurs de position du moment des appareils de coupure (par exemple $Q_0$), et des signaux déterminés par la structure topologique de l'installation de distribution électrique, des éléments topologiques (par exemple $SA_1$, $SA_2$) contenus dans un jeu de base, qui se présentent chaque fois sous la forme d'un des appareils de coupure (par exemple $Q_0$) d'un point nodal non sectionnable (par exemple 4) ou d'un point nodal marginal (par exemple 12) en tant qu'élément topologique simple ou sous la forme d'une séquence de points nodaux (par exemple 4, 5) et d'appareils de coupure (par exemple $Q_0$) en tant qu'élément topologique composé (par exemple $SA_1$) et par lesquels tous les états de fonctionnement d'installations de distribution électriques de structure topologique quelconque peuvent être établis, que :

indépendamment de la structure topologique stockée de l'installation de distribution électrique, sont stockées des règles de verrouillage pour la protection contre les erreurs de commutation indépendantes l'une de l'autre, qui sont fondées sur le jeu de base d'éléments topologiques (par exemple $SA_1$, $SA_2$), et que :

par interrogation des règles de verrouillage de protection contre les erreurs de commutation stockées, une image de libération contenant l'état de libération ou de blocage de chacun des appareils de coupure (par exemple $Q_0$) de l'installation de distribution électrique est produite au moyen des éléments topologiques (par exemple $SA_1$, $SA_2$) fixant l'état de fonctionnement du moment de l'installation de commutation.

2.- Procédé suivant la revendication 1, caractérisé en ce qu'on utilise, à titre d'appareils de coupure, des interrupteurs de puissance (CB), des interrupteurs sectionneurs (IS) et des interrupteurs de mise à la terre (ES), à titre de points nodaux non sectionnables, des lignes de raccordement électriques, et à titre de points nodaux marginaux, des transformateurs, des réacteurs, des lignes, des points de mise à la terre et des points nodaux de connexion entre un interrupteur de puissance et un interrupteur sectionneur, ainsi qu'entre un interrupteur sectionneur et un interrupteur de mise à la terre, et à titre de séquences de points nodaux et d'appareils de coupure, des séquences actives comportant au moins un point nodal actif sous tension, des séquences mises à la terre comportant au moins un point nodal mis à la terre et aucun point nodal actif, des séquences passives sans points nodaux actifs et mis à la terre et des séquences indéfinies comportant au moins un appareil de coupure d'état indéfini.

3.- Procédé suivant la revendication 2, caractérisé en ce que :

à titre de séquence active, on utilise au moins une des séquences partielles suivantes :

- une du type branchement, qui débute à un point nodal actif et se termine à des interrupteurs sectionneurs ouverts ou au premier interrupteur de puissance ouvert et fermé rencontré,

- une du type bus, qui présente au moins un interrupteur de puissance fermé pour la transmission d'énergie et est délimité par des interrupteurs sectionneurs ouverts ou par le premier interrupteur de puissance prévu, et

- une du type point nodal d'interrupteur de puissance qui n'est simplement que d'un seul point nodal, que :

à titre de séquence mise à la terre, on utilise au moins une des séquences suivantes :

- une séquence du type dans lequel plusieurs points nodaux sont prévus et les interrupteurs de mise à la terre associés sont fermés,

- une séquence du type dans lequel un seul point nodal est prévu et l'interrupteur de mise à la terre associé est fermé, et

- une séquence du type dans lequel un interrupteur de puissance libéré, ouvert et mis à la terre d'un côté, est prévu, et que :

à titre de séquence libérée, au moins une des trois séquences suivantes est prévue :

- une séquence du type dans lequel plusieurs points nodaux sont prévus ;

- une séquence du type dans lequel un seul point nodal d'interrupteur sectionneur libéré est prévu, et

- une séquence du type dans lequel un seul point nodal d'interrupteur de puissance libéré est prévu.

4.- Procédé suivant la revendication 1, caractérisé en ce que :

à titre de règles de verrouillage pour la protection contre les erreurs de commutation, sont stockées des règles obligatoires qui concernent en particulier la fiabilité de fonctionnement de la sous-station, ainsi que le comportement des appareils de coupure lors d'une opération de commutation et/ou dans le cas d'un état de commutation indéterminé, et que :

indépendamment des règles obligatoires, sont stockées des règles dépendant de la philosophie d'exploitation, qui augmentent en particulier la fiabilité de fonctionnement de la sous-station dans le cas de variations de potentiel non reconnues ou inopinées, permettent toujours une commutation sélective d'un branchement avec un interrupteur de puissance et/ou permettent toujours le respect des successions de commutation prescrites.

**Claims**

1. Method for switching-error-protected operation of the switching devices (e.g. $Q_0$), arranged between adjacent nodes (e.g. 4, 5) of a switching station, in which method the current operational state of the switching station is determined by means of position indicating signals of the switching devices (e.g. $Q_0$) and switching operation request commands (for example KA), present in the switching station, are interrogated for release or blocking, using the operational state of the switching station determined, by means of switching-error-protection interlocking rules, characterized in that the topological configuration of the switching station is stored by means of signals which contain information on the nodes (e.g. 4, 5) and on the switching devices (e.g. $Q_0$) establishing the relations between adjacent nodes (e.g. 4, 5),

in that in the determination of the current operational state of the switching station from the current position indicating signals of the switching devices (e.g. $Q_0$) and the signals determined by the topological configuration of the switching station, topological elements (e.g. $SA_1$, $SA_2$) contained in a basic set are formed which are in each case formed in the form of one of the switching devices (e.g. $Q_0$), of a nondisconnectable node (e.g. 4) or of a boundary node (e.g. 12) as simple topological element or in the form of a sequence of nodes (e.g. 4, 5) and switching devices (e.g. $Q_0$) as composite topological element (e.g. $SA_1$), and by means of which all operational states of switching stations of any topological configuration can be established,

in that, independently of the topological configuration of the switching station stored, mutually independent switching-error-protection interlocking rules are stored which are based on the basic set of topological elements (e.g. $SA_1$, $SA_2$), and in that by interrogation of the stored switching error-protection interlocking rules by means of the topological elements (e.g. $SA_1$, $SA_2$) establishing the current operational state of the switching station, a release pattern containing the release or blocking state of each of the switching devices (e.g. $Q_0$) of the switching station is generated.

2. Method according to Claim 1, characterized in that circuit breakers (CB), isolators (IS) and earthing switches (ES), are used as switching devices, electrical connecting lines are used as non-disconnectable nodes, and transformers, reactors, lines, earthing points and connecting nodes between a circuit breaker and an isolator and between an isolator and an earthing switch are used as boundary nodes, and

- active sequences containing at least one live active node, earthed sequences containing at least one earthed and no active node, passive sequences without active and earthed nodes and undefined sequences containing at least one switching device of undefined state are used as sequences of nodes and switching devices.

3. Method according to Claim 2, characterized in that
at least one of the following part sequences is used as active sequence :
- one of the feeder type which begins at an active node and ends at open isolators or the first open and closed circuit breaker occurring,
- one of the busbar types which has at least one closed circuit breaker for power transfer and is bounded by open isolators or the first circuit breaker provided, and
- one of the circuit breaker node type which only consists of a single node,
in that at least one of the following sequences is used as earthed sequence :
- a sequence of the type in which more than one node is provided and the associated earthing switches are closed,
- a sequence of the type in which only a single node is provided and the associated earthing switch is closed, and
- a sequence of the type in which an isolated, open and unilaterally earthed circuit breaker is provided, and
in that at least one of the following sequences is provided as isolated sequence :
- a sequence of the type in which more than one node is provided,
- a sequence of the type in which only a single isolated isolator node is provided, and
- a sequence of the type in which only a single isolated circuit breaker node is provided.

4. Method according to Claim 1, characterized in that

mandatory rules concerning, in particular, the operational reliability of the substation and the behaviour of the switching devices during a switching process and/or during an undetermined switching state are stored as switching-error-protection interlocking rules and

in that independently of the mandatory rules, rules dependent on the operating philosophy are stored which, in particular, increase the operational reliability of the substation during undetected or unintentional potential changes, always provide the possibility of selectively switching a feeder by means of a circuit breaker and/or always make it possible to maintain the prescribed switching sequences.

FIG.1

FIG.2

FIG.3

FIG.4

FIG.5